# NEUE EUROPÄISCHE PATENTSCHRIFT

(11) **EP 1 875 814 B2**
(45) Veröffentlichungstag und Bekanntmachung des Hinweises auf die Entscheidung über den Einspruch: **24.06.2015**
(45) Hinweis auf die Patenterteilung: 17.02.2010
(21) Anmeldenummer: 06025375.4
(22) Anmeldetag: 08.12.2006
(51) Int. Cl.: A23L 1/035, A23L 1/0522, A23L 1/27

(54) **Zubereitung für Lebensmittel**
Composition for foodstuff
Préparation pour produits alimentaires

(30) Priorität: 07.07.2006 DE 202006010606 U
(43) Veröffentlichungstag der Anmeldung: 09.01.2008
(73) Patentinhaber: Sensient Colors Europe GmbH, 21502 Geesthacht (DE)
(72) Erfinder: Klingenberg, Andreas Dr., 21465 Reinbek (DE)
(74) Vertreter: RGTH

(56) Entgegenhaltungen:
- EP-A2- 1 692 948
- WO-A1-2004/023900
- WO-A1-2007/090614
- WO-A2-2006/053761
- WO-A2-2007/090610
- DE-A1- 2 534 091
- DE-A1- 10 129 713
- JP-A- H06 172 170
- US-A- 6 007 856
- US-A- 6 162 474
- US-A1- 2006 035 009
- 'Wild Flavors Berlin GmbH & Co.', 21 Januar 2005 vol. 'Produktspezifikation Paprika E'
- 'Wild Flavors Berlin GmbH & Co.', 04 April 2003 vol. 'Produktspezifikation Paprika E'
- 'Wild Flavors Berlin GmbH & Co.', 06 Juni 2003 vol. 'Produktspezifikation Paprika Emulsion AS 5.5 (art.nr. 32121000300000)'
- H.GEISTER: 'Paprika-Oleoresin - pur' FLEISCHWIRT Bd. 69, Nr. 9, 1989, Seiten 1380 - 1382
- J. DELI ET AL: 'Carotenoid Composition in the Fruist of Red Paprika during Ripening; Biosynthesis of Carotenoids in Red Paprika' J.AGRIC.FOOD CHEM. Bd. 49, 2001, Seiten 1517 - 1523
- J.DELI ET AL: 'Separation and identification of carotenoids from different coloured paprika by reversed-phase high-performance liquid chromatography' EUR.FOOD RES. TECHNOL. Bd. 213, 2001, Seiten 301 - 305
- 'Richtlinie 95/34/EG der Kommisio', 26 Juli 1995 vol. 'zur Festlegung spezifischer Reinheitskriterien für Lebensmittelfarbstoffe'

## Beschreibung

Die Erfindung betrifft eine Zubereitung für Lebensmittel und ein Verfahren zu deren Herstellung. Sie betrifft ferner die Verwendung einer solchen Zusammensetzung.

In der Lebensmittelindustrie werden zur Färbung von Nahrungsmitteln seit langem Farbstoffe eingesetzt. Diese, nach ihrem Verwendungszweck als Lebensmittelfarbstoffe bezeichneten Substanzen, sind in vielen Fällen jedoch nicht wasserlöslich, sondern fettlöslich. Eine Verwendung fettlöslicher Substanzen in wasserhaltigen Lebensmitteln wie Säften ist somit nicht ohne weiteres möglich.

US-A-2006/0035009 offenbart einen lipophilen wasserdispergierbaren Lebensmittelfarbstoff auf Carotenoid-Basis.

Carotinoide sind eine Gruppe von Farbstoffen, die in großem Umfang zur Färbung von Lebensmitteln eingesetzt werden. Diese Farbstoffe werden beispielsweise in Getränken, Süßwaren und Joghurtzubereitungen, aber auch Nahrungsergänzungsmitteln wie Multivitamintabletten und bei der Tierernährung eingesetzt. Allerdings sind Carotinoide vollkommen wasserunlöslich. Eine intensive Färbung eines wässerigen Getränkes mit einem solchen Farbstoff wird jedoch nur erreicht, wenn der Farbstoff in dem wässerigen Getränk sehr fein verteilt ist.

Mittels Emulgatoren kann eine kolloidale Verteilung der Farbstoffteilchen in einer wässerigen Phase erreicht werden. Eine solche Verteilung kann weiter unter Zusatz von Stabilisatoren dauerhaft stabilisiert werden. Die Menge an Farbstoff, die in einer wässerigen Phase emulgiert und stabilisiert werden kann, hängt wesentlich von der geeigneten Auswahl an Emulgatoren und Stabilisatoren ab. Um eine befriedigende Farbsättigung zu erreichen und gegenläufige Effekte zu vermeiden, müssen die Art der verwendeten Emulgatoren und Stabilisatoren zudem sorgfältig aufeinander abgestimmt werden. Ferner sollen die Menge an Emulgator und Stabilisator möglichst gering im Verhältnis zu der Menge an fettlöslichem Farbstoff sein. Die nach dem Stand der Technik emulgierbare und stabilisierbare Menge an fettlöslichem Farbstoff in einem wässerigen System ist noch immer unbefriedigend.

Aufgabe der Erfindung ist es, die Nachteile nach dem Stand der Technik zu beseitigen. Es soll insbesondere eine Zubereitung für Lebensmittel angegeben werden, mit deren Hilfe eine große Menge eines fettlöslichen Farbstoffes in einem wässerigen Lebensmittel emulgiert und stabilisiert werden kann.

Diese Aufgabe wird durch die Merkmale der Ansprüche 1, 13 und 14 gelöst. Zweckmäßige Ausgestaltungen der Erfindung ergeben sich aus den Merkmalen der Ansprüche 2 bis 12 sowie 15 bis 18.

Polyglycerinester von Speisefettsäuren (EG-Nummer E-475) und Zitronensäureester von Mono- und/oder Diglyceriden von Speisefettsäuren (EG-Nummer E-472 c) sind Emulgatoren, die zur Verwendung in Lebensmitteln zugelassen sind.

Stärkenatriumoctenylsuccinat ist eine modifizierte Stärke gemäß EG-Nummer E-1450, die durch Umsetzen von Stärke mit Octenylbernsteinsäureanhydrid erhalten wird. Es weist demzufolge ein hydrophiles und lipophiles Ende auf und wird als Hydrokolloid in der Lebensmitteltechnik unter anderem zur Stabilisierung von Farbstoffen verwendet. Stärkenatriumoctenylsuccinat wird in der vorliegenden Erfindung somit als Stabilisator verwendet.

Die Erfindung basiert auf der überraschenden Feststellung, das bei einer Kombination des erfindungsgemäßen Emulgators mit dem erfindungsgemäßen Stabilisator die Wirkung des Emulgators in der farbstoffhaltigen Öl-in Wasser-Emulsion nicht aufgehoben wird, sondern statt dessen die Menge an fettlöslichem Farbstoff, die in einem wässerigen System emulgiert und stabilisiert wird, deutlich erhöht werden kann. Auf diese Weise können wässerigen Lebensmitteln wie Getränken oder Joghurterzeugnissen wesentlich höhere Mengen an fettlöslichen Farbstoffen zugesetzt werden, wodurch eine bessere Farbsättigung erreicht wird.

Der fettlösliche Farbstoff ist vorzugsweise ein Lebensmittelfarbstoff, insbesondere ein Farbstoff, der aus der Gruppe ausgewählt ist, die Carotinoide, Chlorophylle oder Kombinationen dieser umfasst. In einer besonders bevorzugten Ausführungsform ist der fettlösliche Farbstoff ein Carotinoid. Das Carotinoid kann beispielsweise aus der Gruppe ausgewählt sein, die Bixin, Capsanthin, Capsorubin, Lutein, Rhodoxanthin und Kombinationen dieser umfasst.

Erfindungemäße Farbstoffe umfassen zum Beispiel auch die unter EG-Nummer E160 (Carotinoide), E160a (alpha-, beta-, gamma-Carotin, E160b (Bixin, Norbixin, Annato, Orlean), E160c (Capsanthin), E160d (Capsorubin), E160e (Beta-Apo-8'-carotinal), E160f (Carotinal, Carotinsäure-Ethylester, E161 (Xanthophylle, E161a (Flavoxanthin), E161b (Lutein), E161c (Kryptoaxanthin), E161d (Rubixanthin), E161e (Violaxanthin), E161f (Rhodoxanthin), E161g (Canthaxanthin) aufgeführten Verbindungen sowie Kombinationen dieser Verbindungen.

Die erhöhte Beladung der Farbstoff-Formulierung mit einem Farbstoff, wie beispielsweise dem Carotinoid, betrifft flüssige Zubereitungen. Bei der Verwendung nur des Hydrogels, aber nicht der vorgeschlagenen Emulgatoren, kann ein Carotinoid, dispergiert in einem lipid-basierenden Trägerstoff, nur mit ca. 2 bis 3 Gew.-% der Carotinoiddispersion, bezogen auf das Gesamtgewicht einer flüssigen, wasserdispergierbaren Formulierung, stabilisiert werden. Die erfindungsgemäße Zubereitung ermöglicht dagegen die Stabilisierung von 7 bis 10 Gew.-% der Carotinoiddispersion, bezogen auf das Gesamtgewicht einer flüssigen, wasserdispergierbaren Formulierung, und somit ebenfalls der zwei- bis vierfachen Menge.

Der lipid-basierende Trägerstoff ist vorzugsweise ein pflanzliches Triglyceride, beispielsweise Sonnenblumenöl. Der lipid-basierenden Trägerstoff kann weitere Zusatzstoffe wie Antioxidantien enthalten. Der Anteil des reinen Farbstoffes beträgt zwischen 10 und 35 Gew.-%, bezogen aus das Gesamtgewicht von fettlöslichem Farbstoff und lipid-basierenden Trägerstoff. Der lipid-basierenden Trägerstoff wird im Folgenden auch als Ölphase bezeichnet.

Erfindungsgemäß enthält die Zubereitung als Emulgator Polyglycerinester von Speisefettsäuren (E-475), Zitronensäureester von Mono-und/oder Diglyceriden von Speisefettsäuren (E-472 c) oder Gemische von E-475 und E-472 c. Nähere Angaben hierzu sind der Richtlinie 78/663/EWG des Rates vom 25. Juli 1978 zur Festlegung spezifischer Reinheitskriterien für Emulgatoren, Stabilisatoren, Verdickungs- und Geliermittel, die in Lebensmitteln verwendet werden dürfen, zu entnehmen.

Eine Speisefettsäure ist eine gesättigte Fettsäure oder eine ungesättigte Fettsäure, die zur Verwendung in Lebensmitteln zugelassen ist. Vorzugsweise ist die Speisefettsäure eine Fettsäure, die aus der Gruppe ausgewählt ist, die Palmitinsäure, Stearinsäure, Ölsäure und Erucasäure umfasst. Die veresterten Fettsäuren können gleich oder unterschiedlich voneinander sein.

Die Zubereitung kann neben dem Farbstoff weitere Zusatzstoffe, beispielsweise Antioxidantien, Tocopherol, Ascorbinsäure oder Kombinationen davon enthalten.

Die erfingungsgemäße Zubereitung ist als Flüssigkeit formuliert und enthält, jeweils bezogen auf das Gesamtgewicht der Zubereitung,
(a) 5 bis 15 Gew.-% einer Ölphase, die den fettlöslichen Farbstoff enthält;
(b) 0,1 bis 5 Gew.-% Polyglycerinester von Speisefettsäuren; Zitronensäureester von Mono- und/oder Diglyceriden von Speisefettsäuren; oder Gemische dieser Ester;
(c) 20 bis 60 Gew.-% Stärkenatriumoctenylsuccinat; und
(d) 30 bis 70 Gew.-% Wasser.

Die erfindungsgemäße Zubereitung kann ferner 0,5 bis 4 Gew.-% an Antioxidantien, Tocopherol, Ascorbinsäure oder Kombinationen davon enthalten.

Besonders bevorzugt enthält die Zubereitung als Flüssigkeit, jeweils bezogen auf das Gesamtgewicht der Zubereitung,
(a) 7 bis 13 Gew.-% einer Ölphase, die den fettlöslichen Farbstoff enthält;
(b) 1 bis 3 Gew.-% Polyglycerinester von Speisefettsäuren; Zitronensäureester von Mono- und/oder Diglyceriden von Speisefettsäuren; oder Gemische dieser Ester;
(c) 30 bis 40 Gew.-% Stärkenatriumoctenylsuccinat; und
(d) 40 bis 60 Gew.-% Wasser.

Diese erfindungsgemäße Zubereitung kann ferner 1 bis 3 Gew.-% an Antioxidantien, Tocopherol, Ascorbinsäure oder Kombinationen davon enthalten.

Die Ölphase besteht vorzugsweise aus dem fettlöslichen Farbstoff selbst sowie lipid-basierenden Trägerstoffen wie z. B. pflanzlichen Triglyceriden, die durch den weiteren Zusatz von geeigneten Antioxidantien vor einer Oxidation geschützt sind. Der Anteil des reinen Farbstoffes in der Ölphase beträgt zwischen 10 und 35 Gew.-%.

Die Zubereitung kann in Lebensmitteln eingesetzt werden. Beispielhafte Lebensmittel sind Süßwaren, Getränke, wie Fruchtgetränke oder Fruchtzubereitungen, und Joghurtprodukte.

Die Erfindung wird nachfolgend anhand eines Beispiels näher erläutert.

### Beispiel

Das Beispiel beschreibt die Herstellung einer erfindungsgemäßen, carotinoidhaltigen Zubereitung in flüssiger Form (Schritte 1 bis 3)

### 1.Herstellen der Ölphase:

70 g eines Paprika-Extrakts E-160 c, der 15 Gew.-% Farbstoffgehalt, bezogen auf den Paprika-Extrakt, enthielt, wurden unter starkem Rühren in 30 g Sonnenblumenöl dispergiert. Das Gemisch wurde unter Zusatz von 10 g Tocopherol und 3 g Polyglycerinester von Speisefettsäuren 30 Minuten bei 70 °C unter starkem Rühren erhitzt und anschließend auf 40 °C temperiert.

### 2. Herstellen der Wasserphase:

520 g demineralisiertes Wasser wurden auf 40 °C erhitzt, und 15 g Ascorbinsäure wurden zugesetzt. Der Mischung wurden dann unter starkem Rühren innerhalb von 10 Minuten 350 g Stärkenatriumoctenylsuccinat zugesetzt.

### 3. Homogenisieren der Ölphase in der Wasserphase:

Der unter starkem Rühren gehaltenen Wasserphase wurde schrittweise über einen Zeitraum von 15 Minuten bei einer Temperatur von 40 °C die gesamte Ölphase zugesetzt, über einen Ultraturrax-Homogenisator verteilt und anschließend mittels Hochdruckhomogenisation bei 300 bar feinst dispergiert.

### 4. Sprühtrocknung zum Pulverprodukt: (Referenzbeispiel)

Die in Schritt 3 erhaltene flüssige Zubereitung wurde mittels Sprühtrocknung bei 60 bis 180 °C in eine pulverförmige Zubereitung überführt.

### Ergebnisse

100 g der in Schritt 4 erhaltenen pulverförmigen Zubereitung enthielten 2,2 Gew.-% Farbstoffgehalt E-160 c, bezogen auf das Gesamtgewicht der Zubereitung.

## Patentansprüche

1. Zubereitung für Lebensmittel,
**dadurch gekennzeichnet,**
**dass** sie als Flüssigkeit formuliert ist und, jeweils bezogen auf das Gesamtgewicht der Zubereitung,
(a) 5 bis 15 Gew.-% einer Ölphase, die einen fettlöslichen Farbstoff, dispergiert in einem lipid-basierenden Trägerstoff enthält;
(b) 0,1 bis 5 Gew.-% Polyglycerinester von Speisefettsäuren; Zitronensäureester von Mono- und/oder Diglyceriden von Speisefettsäuren; oder Gemische dieser Ester;
(c) 20 bis 60 Gew.-% Stärkenatriumoctenylsuccinat; und
(d) 30 bis 70 Gew.-% Wasser,
umfasst.

2. Zubereitung nach Anspruch 1,
**dadurch gekennzeichnet,**
**dass** der fettlösliche Farbstoff ein Lebensmittelfarbstoff ist.

3. Zubereitung nach Anspruch 1 oder Anspruch 2,
**dadurch gekennzeichnet,**
**dass** der fettlösliche Farbstoff aus der Gruppe ausgewählt ist, die Carotinoide, Chlorophylle oder Kombinationen dieser umfasst.

4. Zubereitung nach einem der vorstehenden Ansprüche,
**dadurch gekennzeichnet,**
**dass** der fettlösliche Farbstoff ein Carotinoid ist.

5. Zubereitung nach Anspruch 4,
**dadurch gekennzeichnet,**
**dass** das Carotinoid aus der Gruppe gewählt ist, die Bixin, Capsanthin, Capsorubin, Lutein, Rhodoxanthin und Kombinationen dieser umfasst.

6. Zubereitung nach einem der vorstehenden Ansprüche,
**dadurch gekennzeichnet,**
**dass** sie ferner Antioxidantien, Tocopherol, Ascorbinsäure oder Kombinationen davon enthält.

7. Zubereitung nach einem der vorstehenden Ansprüche,
**dadurch gekennzeichnet,**
**dass** der lipid-basierende Trägerstoff ein pflanzliches Triglycerid ist.

8. Zubereitung nach Anspruch 7,
**dadurch gekennzeichnet,**
**dass** der lipid-basierende Trägerstoff ein Sonnenblumenöl ist.

9. Zubereitung nach einem der vorstehenden Ansprüche,
**dadurch gekennzeichnet,**
**dass** der Anteil des fettlöslichen Farbstoffs in dem lipid-basierenden Trägerstoff 10 bis 35 Gew.-% beträgt, bezogen auf das Gesamtgewicht von fettlöslichem Farbstoff und lipidbasierendem Trägerstoff.

10. Zubereitung nach Anspruch 1,
**dadurch gekennzeichnet,**
**dass** sie ferner 0,5 bis 4 Gew.-%, bezogen auf das Gesamtgewicht der Zubereitung, an Antioxidantien, Tocopherol, Ascorbinsäure oder Kombinationen davon enthält.

11. Zubereitung nach Anspruch 1 oder Anspruch 10,
**dadurch gekennzeichnet,**
**dass** sie, jeweils bezogen auf das Gesamtgewicht der Zubereitung,
(a) 7 bis 13 Gew.-% einer Ölphase, die den fettlöslichen Farbstoff enthält;
(b) 1 bis 3 Gew.-% Polyglycerinester von Speisefettsäuren; Zitronensäureester von Mono- und/oder Diglyceriden von Speisefettsäuren; oder Gemische dieser Ester;
(c) 30 bis 40 Gew.-% Stärkenatriumoctenylsuccinat; und
(d) 40 bis 60 Gew.-% Wasser,
umfasst.

12. Zubereitung nach Anspruch 11,
**dadurch gekennzeichnet,**
**dass** sie ferner 1 bis 3 Gew.-%, bezogen auf das Gesamtgewicht der Zubereitung, an Antioxidantien, Tocopherol, Ascorbinsäure oder Kombinationen davon, enthält.

13. Verfahren zur Herstellung einer Zubereitung nach einem der Ansprüche 1 bis 12, umfassend
- das Bereitstellen des fettlöslichen Farbstoffes in einer Ölphase; und
- das Zumischen von Stärkenatriumoctenylsuccinat und Polyglycerinestern von Speisefettsäuren, Zitronensäureestern von Mono- und/oder Diglyceriden von Speisefettsäuren, oder Gemischen dieser Ester.

14. Verwendung einer Zubereitung nach einem der vorstehenden Ansprüche zur Herstellung eines Lebensmittels.

15. Verwendung nach Anspruch 14,
**dadurch gekennzeichnet,**
**dass** das Lebensmittel aus der Gruppe ausgewählt ist, die Süsswaren, Getränke und Joghurtprodukte umfasst.

16. Verwendung nach Anspruch 14 oder Anspruch 15,
**dadurch gekennzeichnet,**
**dass** das Lebensmittel ein Fruchtgetränk oder eine Fruchtzubereitung ist.

17. Verwendung nach einem der Ansprüche 14 bis 16,
**dadurch gekennzeichnet,**
**dass** die Zubereitung mit Wasser vermischt wird.

18. Verwendung nach Anspruch 17,
**dadurch gekennzeichnet,**
**dass** 50 Gew.-% der Zubereitung mit 50 Gew.-% Wasser vermischt werden.

## Claims

1. Composition for foodstuff
**characterized in that**
it is formulated as a liquid, and comprises, each in relation to the total weight of the composition:
(a) 5 to 15 % by weight of an oil phase which contains a fat-soluble colouring dispersed in a lipid-based excipient;
(b) 0.1 to 5 % by weight of polyglycerol esters of fatty acids; citric acid esters of mono- and / or diglycerides of fatty acids; or mixtures of these esters;
(c) 20 to 60 % by weight of starch sodium octenyl succinate;
(d) 30 to 70 % by weight of water.

2. Composition according to claim 1, **characterized in that** the fat-soluble colouring is a food coloring.

3. Composition according to claim 1 or claim 2, **characterized in that** the fat-soluble colouring is selected from the group comprising carotenoids, chlorophylls or combinations of these.

4. Composition according to one of the preceding claims, **characterized in that** the fat-soluble colouring is a carotenoid.

5. Composition according to claim 4, **characterized in that** the carotenoid is selected from the group comprising bixin, capsanthin, capsorubin, lutein, rhodoxanthin and combinations of these.

6. Composition according to one of the preceding claims, **characterized in that** it also contains antioxidants, tocopherol, ascorbic acid or combinations thereof.

7. Composition according to one of the preceding claims, **characterized in that** the lipid-based excipient is a plant triglyceride.

8. Composition according to claim 7, **characterized in that** the lipid-based excipient is a sunflower oil.

9. Composition according to one of the preceding claims, **characterized in that** the proportion of fat-soluble colouring in the lipid-based excipient is 10 to 35 % by weight in relation to the total weight of fat-soluble colouring and lipid-based excipient.

10. Composition according to claim 1, **characterized in that** it further contains 0.5 to 4 % by weight, in relation to the total weight of the composition, of antioxidants, tocopherol, ascorbic acid, or combinations thereof.

11. Composition according to claim 1 or claim 10, **characterized in that** it comprises, each in relation to the total weight of the preparation,
(a) 7 to 13 % by weight of an oil phase which contains the fat-soluble colouring;
(b) 1 to 3 % by weight of polyglycerol esters of fatty acids; citric acid esters of mono- and / or diglycerides of fatty acids; or mixtures of these esters;
(c) 30 to 40 % by weight of starch sodium octenyl succinate;
(d) 40 to 60 % by weight of water.

12. Composition according to claim 11, **characterized in that** it further comprises 1 to 3 % by weight in relation to the total weight of the composition, of antioxidants, tocopherol, ascorbic acid, or combinations thereof.

13. Method for producing a composition according to any one of claims 1 to 12, comprising
- providing the fat-soluble colouring in an oil phase; and
- mixing in starch sodium octenyl succinate and polyglycerol esters of fatty acids, citric acid esters of mono- and / or diglycerides of fatty acids, or mixtures of these esters.

14. Use of a composition according to any one of the preceding claims for producing a foodstuff.

15. Use according to claim 14,**characterized in that** the foodstuff is selected from the group comprising confectionery, drinks and yoghurt products.

16. Use according to claim 14 or claim 15, **characterized in that** the foodstuff is a fruit drink or a fruit composition.

17. Use according to one of claims 14 to 16, **characterized in that** the composition is mixed with water

18. Use according to claim 17, **characterized in that** 50 % by weight of the composition are mixed with 50 % by weight of water.

## Revendications

1. Composition pour aliments, **caractérisée en ce qu'**elle est formulée sous forme liquide et comprend, à chaque fois par rapport au poids total de la composition,
(a) 5 à 15% en poids d'une phase huileuse qui contient un colorant soluble dans les graisses, dispersé dans une substance support à base de lipides ;
(b) 0,1 à 5% en poids d'esters de polyglycérol d'acides gras alimentaires ; d'esters de l'acide citrique de monoglycérides et/ou de diglycérides d'acides gras alimentaires ; ou de mélanges de ces esters ;
(c) 20 à 60% en poids d'octénylsuccinate d'amidon sodique ;
(d) 30 à 70% en poids d'eau.

2. Composition selon la revendication 1, **caractérisée en ce que** le colorant soluble dans les graisses est un colorant alimentaire.

3. Composition selon la revendication 1 ou 2, **caractérisée en ce que** le colorant soluble dans les graisses est choisi dans le groupe qui comprend les caroténoïdes, les chlorophylles ou leurs combinaisons.

4. Composition selon l'une quelconque des revendications précédentes, **caractérisée en ce que** le colorant soluble dans les graisses est un caroténoïde.

5. Composition selon la revendication 4, **caractérisée en ce que** le caroténoïde est choisi dans le groupe qui comprend la bixine, la capsanthine, la capsorubine, la lutéine, la rhodoxanthine et leurs combinaisons.

6. Composition selon l'une quelconque des revendications précédentes, **caractérisée en ce qu'**elle contient en outre des antioxydants, du tocophérol, de l'acide ascorbique ou leurs combinaisons.

7. Composition selon l'une quelconque des revendications précédentes, **caractérisée en ce que** la substance support à base de lipides est un triglycéride végétal.

8. Composition selon la revendication 7, **caractérisée en ce que** la substance support à base de lipides est une huile de tournesol.

9. Composition selon l'une quelconque des revendications précédentes, **caractérisée en ce que** la proportion de colorant soluble dans les graisses dans la substance support à base de lipides est de 10 à 35% en poids, par rapport au poids total de colorant soluble dans les graisses et de substance support à base de lipides.

10. Composition selon la revendication 1, **caractérisée en ce qu'**elle contient en outre 0,5 à 4% en poids, par rapport au poids total de la composition, d'antioxydants, de tocophérol, d'acide ascorbique ou de leurs combinaisons.

11. Composition selon la revendication 1 ou la revendication 10, **caractérisée en ce qu'**elle contient, à chaque fois par rapport au poids total de la composition,
(a) 7 à 13% en poids d'une phase huileuse qui contient le colorant soluble dans les graisses ;
(b) 1 à 3% en poids d'esters de polyglycérol d'acides gras alimentaires ; d'esters de l'acide citrique de monoglycérides et/ou de diglycérides d'acides gras alimentaires ; ou de mélanges de ces esters ;
(c) 30 à 40% en poids d'octénylsuccinate d'amidon sodique ; et
(d) 40 à 60% en poids d'eau.

12. Composition selon la revendication 11, **caractérisée en ce qu'**elle contient en outre 1 à 3% en poids, par rapport au poids total de la composition, d'antioxydants, de tocophérol, d'acide ascorbique ou de leurs combinaisons.

13. Procédé pour la préparation d'une composition selon l'une quelconque des revendications 1 à 12, comprenant
- la mise à disposition du colorant soluble dans les graisses dans une phase huileuse ; et
- le mélange d'octénylsuccinate d'amidon sodique et d'esters de polyglycérol d'acides gras alimentaires, d'esters de l'acide citrique de monoglycérides et/ou de diglycérides d'acides gras alimentaires ou de mélanges de ces esters.

14. Utilisation d'une composition selon l'une quelconque des revendications précédentes pour la préparation d'un aliment.

15. Utilisation selon la revendication 14, **caractérisée en ce que** l'aliment est choisi dans le groupe comprenant les confiseries, les boissons ou les produits à base de yogourt.

16. Utilisation selon la revendication 14 ou la revendication 15, **caractérisée en ce que** l'aliment est un jus de fruit ou une préparation à base de fruits.

17. Utilisation selon l'une quelconque des revendications 14 à 16, **caractérisée en ce que** la composition est mélangée à l'eau.

18. Utilisation selon la revendication 17, **caractérisée en ce que** 50% en poids de la composition sont mélangés avec 50% en poids d'eau.
